# EUROPEAN PATENT APPLICATION

(11) **EP 0 638 909 A1**
(43) Date of publication of application: **15.02.1995**
(21) Application number: 93113010.8
(22) Date of filing: 13.08.1993
(51) Int. Cl.: H01C 1/026, G01K 7/18

(54) **Temperature-sensitive resistor and its production process**

(71) Applicant: GITEM Technical and Production Complex of SEPO JSCo, Saratov, 410033 (RU); VYMPEL-S Limited Partnership, Saratov, 410009 (RU)
(72) Inventor: Alekseevich, Shilyaev Anatoly, Moscow 129348 (RU); Victorovich, Safonov Vladimir, Moscow 129348 (RU); Nicolaevich, Emohonov Victor, Moscow 125047 (RU); Fedorovich, Antonovsky Alexander, Moscow 117321 (RU); Ivanovich, Gorchitsa Gennady, Moscow Region 141100 (RU); Nicolaevich, Goncharov Igor, Moscow (RU); Anatolyevich, Merkulov Sergey, Moscow Region 141070 (RU); Vasilyevich, Sidorenko Anatoly, Moscow 117465 (RU); Egorovich, Alexandrov Vasily, Moscow 117131 (RU)
(74) Representative: Patentanwälte Zellentin & Partner

(57) **Abstract**

The invention belongs to physics sphere and can be used in the control equipment for temperature measurement and also in temperature-sensitive resistor production itself.

The problem, which is solved by the applied invention is the creation of a film temperature-sensitive resistor which provides the accuracy of the results, the high speed of response, the stability and the reliability, and also the creation of its production process allowing for "spare" regimes concerning the transducer elements.

Temperature-sensitive resistor containts the dielectric substrate 1, the film sensing element 2 in a meander form with the contact outputs 3 and 4 and the protective dielectric coating 5. The sensing element 2 is freely spaced in a groove 6 of a dielectric substrate 1 without any interaction with the walls. The tight cavity 7, formed by the groove 6 and the coating 5 is filled by an inert gas.

In production of the temperature-sensitive resistor the groove 6 first is fulfilled in a dielectric substrate 1, next the sensing element 2 is spaced in it and the protective dielectric coating 5 is applied with a simultaneous packing of a formed tight cavity 7 with an inert gas.

## Description

The invention belongs to physics sphere and can be used in the control equipment for temperature measurement, and in temperature-sensitive resistor production itself as well.

From the existing level of technique the wire-wound temperature-sensitive resistors are known, of which the most precise consist in bifilar helix made of a pure platinic wire anchored to the quartz-core or dropped in a quartz-tube. The helix is suspended in an inert gas atmosphere and is in contact with the core structure at a minimum number of points. The mechanical stresses under its deformation during the process of measurements, because of the difference in thermal-expansion coefficients (TEC) of resistance element and core structure materials, are reduced to a minimum ("Les Capteurs en Instrumentation Industrielle" par Georges Asch, Ingénieur E.S.E., Professeur à l'université Lyon I avec la collaboration, BORDAS, Paris,1991). [1]

As for production process of such temperature-sensitive resistors [1], it is sufficiently traditional and represents the sequence of mechanical assignments for manufacture of temperature-sensitive resistor individual elements and for their assembly into a complete package.

The mostly close technical decision, taken as a prototype of a temperature-sensitive resistor is the platinic film temperature-sensitive resistor, containing the flat ceramic substrate, to which the platinic film sensing element in a meander form with the contact outputs is applied. The sensing element and the ceramic substrate as well are overlayed with a protective ceramic coating to protect an active platinic layer against damage and influence of an outside atmosphere (Franzis Elektronic-Fachbuch, Gerhard Weigleb "Sensortechnik. Übersicht, Applikation, Anwendungen",1986, Franzis-Verlag GmbH, München) [2].

The production process of temperature-sensitive resistors presented in a cited book [2] is taken as a progenitor of temperature - sensitive resistor production process. The platinic layer ∼ 2µm thick is applied to a ceramic substrate by spraying. An ornament in a meander form is "burnt out" by lazer in a sprayed layer and next a delicate finishing is carried out. Thereupon the sensing element contact outputs are manufactured by the thermocompressing welding method. An active platinic layer and the ceramic substrate as well are overlayed with a protective ceramic coating ∼ 10µm thick to protect them against damage and influence of an outside atmosphere.

An appraisal of the technique level in existence reveals that the temperature-sensitive resistor [1] analogue has some disadvantages, which are connected with its mechanical embrittlement and with not high speed of response because of the transducer great mass. Whilst the temperature-sensitive resistor [2] progenitor has lesser measurements accuracy as compared to analogue [1], it exhibits the higher speed of response. Besides, the temperature-sensitive resistor [2] progenitor in itself is not sufficiently stable and hence it has the reduced measurements accuracy. The cause of instability is the soiling of the platinum by the armouring material and the advent of the mechanical stresses in an operation because of the difference in TEC of sensing element (platinum) and of ceramic substrate materials.

As a disadvantage of the prototype of temperature-sensitive resistor [2] production process one can intimate that in the process of production (as it was described above) the platinum-the material of a sensing element is soiled by the armouring material of the ceramic substrate and of the protective ceramic coating, overlayed above. The negative consequences of such a production process manifest themselves in a temperature-sensitive resistor operation as not high measurements accuracy and instability.

The task, which is solved by the applied invention is the creation of a film temperature-sensitive resistor which provides the accuracy of the results, the high speed of response, the stability, the reliability and also the creation of the production process allowing for "spare" regimes concerning the transducer elements.

To technical results provided by the applied device the following can be assigned: the elimination of mechanical stresses in a sensing element, which are brought about in operation because of the difference in TEC of sensing element and of the temperature-sensitive resistor dielectric parts materials, and to technical results provided by the applied process the following can be assigned: elimination of an interaction between the sensing element and the dielectric elements of a temperature-sensitive resistor.

The problem in hand is solved with the achievement of the applied technical result by the fact that, in a temperature-sensitive resistor, containing the dielectric substrate with the film sensing element in a meander form placed on it, which has the contact outputs, and with the protective dielectric coating sputtered above onto the ceramic substrate and onto the sensing element, according to the invention, the groove for the sensing element registering in plan with the last mentioned in a meander shape is fulfilled in a dielectric substrate, the groove width and depth are fulfilled exceeding the cross section width and depth of any sensing element section, in this case the sensing element itself is located in the groove of the dielectric substrate without any interaction with its walls and bottom, and also without interaction with the protective dielectric coating sputtered above onto the dielectric substrate with the formation of a tight cavity between itself and the groove in a meander form, the sensing element is located in this tight cavity, filled by an inert gas.

The thickness of a sensing element cross section is fulfilled exceeding the electron distance of free travel in metal more than a 100 times.

The sensing element is fulfilled of a pure metal.

The dielectric substrate and the protective dielectric coating are manufactured of the same or of different materials.

The metal purity of the sensing element is chosen equal to 99,95÷99,99%.

The production process of the temperature-sensitive resistor implying that the sensing element in a meander form is located on a dielectric substrate, and next the protective dielectric coating is sputtered above onto the dielectric substrate and onto the sensing element, according to the invention the groove in a meander form in plan is fulfilled on a dielectric substrate for a similar configured sensing element and fulfilled associating it and yet with the width and depth exceeding the cross section width and depth, the sensing element is located in the groove of a meander form without interaction of the element with the walls and the bottom of the groove, the protective dielectric coating is sputtered above with the formation of a tight cavity between the coating, walls and bottom of the meander-shaped groove where the sensing element is located, with a simultaneous filling it with an inert gas and with an exclusion of an interaction between the sensing element and the protective dielectric coating.

The invention is explained by the drawings, where:

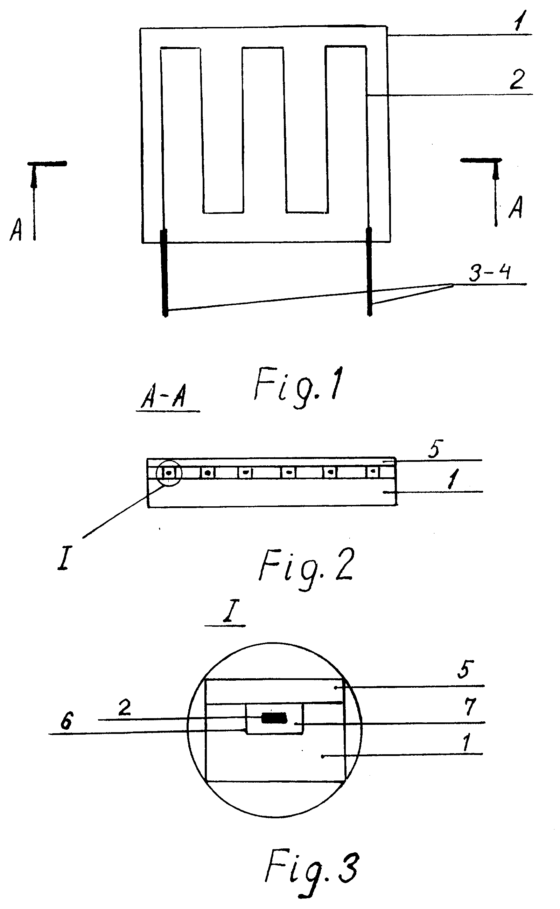

- In Fig.1: the general view of the temperature-sensitive resistor is shown, the plan view;
- In Fig.2: - section A-A in Fig.1
- In Fig.3: - unit I in Fig.2
Temperature-sensitive resistor contains the dielectric substrate 1 and the film sensing element 2 in a meander form with contact outputs 3 and 4. The protective dielectric coating 5 is applied above to the dielectric substrate 1.

The groove 6 in a meander form for a sensing element 2 registering with the last mentioned in configuration is fulfilled in a dielectric substrate 1. The groove 6 width and depth are fulfilled exceeding the cross section width and depth of any section of the sensing element 2. The sensing element 2 itself is located in the groove 6 of a dielectric substrate 1 without any interaction with its walls and bottom and also without interaction with the protective dielectric coating 5 sputtered above onto the dielectric substrate 1. The protective dielectric coating 5 is sputtered onto the substrate 1 in such a way that the protective coating 5 and the groove 6 in a meander shape form the tight cavity 7, where the sensing element 2 is located in a "suspended" condition. Being formed in such a manner the tight catity 7 itself is filled with an inert gas.

The thickness of a sensing element 2 cross section is fulfilled exceeding the electron distance of free travel in metal more than a 100 times.

The sensing element 2 can be manufactured of a pure metal.

The dielectric substrate 1 and the protective dielectric coating 5 can be manufactured of the same or of different materials.

The metal purity of a sensing element 2 is chosen equal to 99,95÷99,99%.

The temperature-sensitive resistor is functioning in a following manner. The resistor is located in fluid or applied to the surface, which temperature should be measured. The resistor is placed in a circuit by the contact outputs 3 and 4 (not shown). Sensing element 2 expends (elongates) or contracts (shortens) under the influence of an object temperature under measurement, in so doing it changes its resistance. The resistance (sensing element 2), placed into a circuit, changes the current characteristics in a circuit; the change in current behaviour in a circuit is outputted through the transducer (not shown) to a numerical indicator, which records the fluid or the object temperature under measurement.

In relation to sensing element 2, dielectric substrate 1 and protective coating 5 heat expansion which takes place the measurement of the dimentions of the above-mentioned elements occur unevenly because of the difference in coefficients of heat expansion. Yet, the sensing element 2 is located in a groove 6 with a clearance relative to its bottom and walls and to a dielectric coating 5 as well, adjoining it from above. And because of this the immediate interaction of a sensing element 2 with the dielectric parts 1 and 5 at different expansion and compression of resistor elements within the range of the allowable temperatures under measurement doesn't take place, increasing the accuracy, the speed of response, the stability and the reliability. An inert gas packed in a formed tight cavity 7 also favours this.

By way of example of an execution of the temperature-sensitive resistor production process the following can be cited. The groove 6 in a meander form in plan is fulfilled on a ceramic substrate 1 for the sensing element 2 of a similar configuration. The sensing element 2 manufactured beforehand according to any one of known methods already with the contact outputs 3 and 4 is located in a groove 6. Yet, the groove 6 is fulfilled in such a way that the sensing element 2 is spaced in it with a clearance for a groove 6 height and for its width in a "suspended" state without any interaction with the groove 6 walls and bottom. Next, the protective dielectric coating 5 is applied above in such a manner that it forms with the groove 6 the tight cavity 7 located in between, where in its turn the sensing element 2 in a meander form is spaced. Coincidentally with an application of a protective dielectric coating 5 the tight cavity 7 is filled with an inert gas. The dielectric coating 5 is applied in such a way that it doesn't immediately interact with the sensing element 2.

By this means a given temperature-sensitive resistor by virtue of its constructional features and special features of production process makes it possible to achieve the task in hand with an advance of stability, reliability and with an increase of an accuracy and speed of response.

## Claims

1. Temperature-sensitive resistor, containing the dielectric substrate 1 with the film sensing element 2 in meander form placed on it, which has the contact outputs 3 and 4, and with the protective dielectric coating 5 sputtered above onto the ceramic substrate 1 and onto the sensing element 2, differs in that the groove 6 for the sensing element 2 registering with the last mentioned in a meander shape in plan is fulfilled in a dielectric substrate 1, the groove width and depth are fulfilled exceeding the cross section width and depth of any section of a sensing element 2, in this case the sensing element 2 itself is located in the groove 6 of a dielectric substrate 1 without any interaction with its walls and bottom and also without interaction with the protective dielectric coating 5 sputtered above onto the dielectric substrate 1 with the formation of a tight cavity 7 between itself and the groove 6 in a meander form, the sensing element 2 is spaced in a tight cavity, which is filled with an inert gas.

2. Temperature-sensitive resistor according to the 1^{st} point differs in that the thickness of a sensing element 2 cross section is fulfilled exceeding the electron distance of free travel in metal more than a 100 times.

3. Temperature-sensitive resistor according to the 1^{st} point differs in that the sensing element 2 is fulfilled of a pure metal.

4. Temperature-sensitive resistor according to the 1^{st} point differs in that the dielectric substrate 1 and the protective dielectric coating 5 are manufactured of the same or of different materials.

5. Temperature-sensitive resistor according to the 3^{rd} point differs in that the metal purity of a sensing element 2 is chosen equal to 99,95÷99,99%.

6. The production process of temperature-sensitive resistor implying that the sensing element 2 in a meander form is located on a dielectric substrate 1 and next the protective dielectric coating 5 is sputtered above onto the dielectric substrate 1 and onto the sensing element 1 differs in that the groove 6 in a meander form in plan is fulfilled in a dielectric substrate 1 for a sensing element 2 of a similar configuration, associating the sensing element 2 and yet with the width and depth exceeding the sensing element 2 cross section width and depth, the sensing element 2 is spaced in a meander form groove 6 without interaction of the element with the walls and the bottom of the groove 6, the protective dielectric coating is sputtered above with the formation of a tight cavity 7 between the coating, the walls and the bottom of a meander-shaped groove 6 where the sensing element 2 is located with a simultaneous filling it with an inert gas and with an exclusion of an interaction between the sensing element 2 and the protective dielectric coating 5.
